# EUROPEAN PATENT APPLICATION

(11) **EP 4 277 117 A1**
(43) Date of publication of application: **15.11.2023**
(21) Application number: 23158289.1
(22) Date of filing: 23.02.2023
(51) Int. Cl.: H02S 20/23, F24S 40/44, H02S 30/10, H02S 40/10

(54) **DRAINAGE CLIP FOR A SOLAR PANEL**

(30) Priority: 11.05.2022 NL 2031832
(71) Applicant: Van Der Valk Systemen B.V., 2681 LP Monster (NL)
(72) Inventor: den Boef, Joran, 2681 LP Monster (NL); Prins, Vincent, 2681 LP Monster (NL)
(74) Representative: Nederlandsch Octrooibureau

(57) **Abstract**

A drainage clip (301) for draining water accumulating above a protruding portion of a circumferential frame of solar panel is provided. The drainage clip comprises two jaws (311, 312), each provided with a contact surface (344, 354) for engaging the solar panel, and a height-adjustability feature (363) for adjusting the distance between the two contact surfaces. After attaching the drainage clip to the solar panel, the drainage clip functions as a siphon and forms a drainage path (315) to drain water from the top surface of the solar panel. The drainage path comprises at least a section where the water flows upward to pass the protruding portion. The invention further relates to a solar panel installation comprising solar panels with drainage clips.

## Description

### Technical Field

The invention relates to a drainage clip to arrange on or around a frame of a solar panel to remove stagnant water from a top surface of the solar panel. The invention further relates to a solar panel installation comprising a plurality of drainage clips.

### Background Art

Solar panels, also referred to as photovoltaic panels, are typically provided with a circumferential frame. The frame surrounds a light receiving surface of the solar panel and protects the solar cells against damages. The frame is generally made of a robust material and configured to be easily connected to a mounting assembly, enabling a quick and safe installation of the solar panel on the roof of a building or any other surface.

A disadvantage of the current frames around solar panels is that the circumferential frame provides a portion with a protruding edge at the top surface, i.e., the light-receiving surface, of the solar panel. Solar panels are typically mounted in an inclined position, and when it rains, rain water may accumulate behind the protruding edge at a lower end of the solar panel. The accumulated water will remain on the top surface of the solar panel until it evaporates and even after evaporation, dirt may remain on the top surface at a lower end of the solar panel. This facilitates the growth of moss and/or algae, and over time, dirt can accumulate as a result of the repeated rain water accumulation and evaporation.

The accumulated water and dirt generally reduces the power generation capability of the solar panel. Moreover, the water accumulation may not be constant over the full width of the solar panel, leading to the formation of hot spots that may not only lead to a temporary reduced power generation until the solar panel is cleaned, but may also reduce the service life of the solar panel. It would therefore be desirable to provide a solution that eliminates or mitigates the negative effects associated with the rain water accumulation on the top surface of a solar panel due to the surrounding circumferential frame.

Patent document JP 5456188 B2 discloses a frame member that enables drainage of water from the top surface of the solar panel to a back surface of the solar panel. The frame member has a portion with a U-shaped cross-section extending along the entire circumference of the solar panel and a buffer element sandwiched between the portion with U-shaped cross-section and a side of the solar panel. At least at one location along the circumference, the buffer element is removed and a notch portion is provided in the U-shaped cross-section to form a drainage channel that starts at the light receiving surface side and extends around the lower edge of the solar panel to a bottom surface side of the solar panel.

Disadvantageously, the frame member of JP 5456188 B2 needs to be provided on the solar panel directly during manufacture. In addition, the drainage channel is provided at a fixed location, and water may collect in one of the corners of the panel, or another one or more lowest or deepest area(s) on the top surface of the solar panel due to bending of the solar panel. It would be desirable to provide an improved drainage of accumulated water that can be used with any type of solar panel and/or that may be retro-fitted to an existing solar panel installation.

### Summary of Invention

Therefore, according to a first aspect of the invention, there is provided a drainage clip for draining water accumulating on a top surface of a solar panel and behind a protruding portion of a circumferential frame. The portion protrudes from a top surface of the solar panel. The drainage clip comprises a first jaw having a first contact surface for engaging a top surface of the solar panel; a second jaw connected to the first jaw and having a second contact surface for engaging a bottom surface of the solar panel; and a height-adjustability feature for adjusting the distance between the first contact surface of the first jaw and the second contact surface of the second jaw; wherein after attaching the drainage clip to the solar panel, the drainage clip functions as a siphon and forms a drainage path to drain water from the top surface of the solar panel, the drainage path comprising at least a section where the water flows upward to pass the protruding portion.

In this context the term "solar panel" includes the panel carrying the light receiving surface and a circumferential frame provided around the light receiving surface. The light receiving surface is generally the top surface of the solar panel. The terms "first jaw" and "second jaw" are used to indicate two elements or two groups of elements that can be moved with respect to each other. Both the first jaw and second jaw may thus consist of a single element, yet may also comprise a plurality of elements that form the first jaw or the second jaw together. For example, in an embodiment, a jaw may comprise a plurality of legs, wherein each of the plurality of legs is individually connected to the other jaw. As such, the first and second contact surface may be a single surface or may be composed of a plurality of surfaces.

The first contact surface and second contact surface are provided to contact opposite sides of the solar panel. Typically, the first contact surface is configured to contact the light receiving surface, and the second contact surface is configured to contact a bottom surface of the circumferential frame. In embodiments, also both contact surfaces may contact the panel carrying the light receiving surface, or both contact surfaces may contact the circumferential frame. Preferably, the first contact surface contacts a local deepest or lowest point on the top surface of the solar panel, as naturally the stagnant water would flow towards these points and accumulate there.

The drainage clip is attached to a solar panel to provide a drainage path that drains water from the top surface of the solar panel to an edge of the solar panel. Using a capillary action, the water is guided around the protruding portion of the circumferential frame. The drainage path comprises at least a section where the water flows upward to pass the protruding portion of the circumferential frame. The capillary action helps the water to flow past the protruding portion. In addition, the drainage path may include one or more sections where the water flows away from the top surface under the force of gravity. After reaching an edge of the circumferential frame, the water may naturally drip from the solar panel under the force of gravity. The drainage path starts from the first contact surface, which typically means it starts from an edge or border of the first contact surface. The first jaw is configured to, after attachment of the drainage clip, provide a narrow channel extending from a lowest point of the top surface of the solar panel along a drainage surface of the first jaw to an edge of the solar panel.

An advantage of the drainage clip according to the invention is that it may be attached to a solar panel to drain water that has accumulated on the top surface. This improves the performance of the solar cells and thereby increases the power output. In addition, it reduces the frequency that is required for cleaning the panels to remove the accumulated dirt and moss or algae. The drainage clip is typically arranged around the circumferential frame of the solar panels after or at the end of installing the solar installation. At that moment it is known where the lowest point or points on each solar panel are positioned, allowing the drainage clip to be arranged at an optimal position for most efficiently draining the water, e.g., at or close to a lowest point on the top surface of the solar panel.

The height-adjustability feature on the drainage clip further allows the drainage clip to be attached to a large variety of different solar panels, independent of the type, size and/or thickness of the solar panel including the circumferential frame. Consequently, one drainage clip can be used in many different projects, permitting a mass production of the drainage clip without the need to tailor the drainage clip for a specific type of solar panel. Solar panel frames may have different thicknesses and/or sizes, and the drainage clip according to the invention fits around a plurality of differently sized and/or shaped frames.

In an embodiment, the drainage clip further comprises a resilient element on the second jaw, wherein a contact surface of the resilient element is arranged to exert a force on the bottom surface of the solar panel, and wherein the contact surface of the resilient element is arranged eccentrically to the first contact surface. The resilient element shows resilience extending along at least a direction perpendicular to the bottom surface of the solar panel. This permits the contact surfaces of the first jaw and the resilient element to make contact with the top surface and bottom surface of the solar panel respectively, while the distance between the contact surfaces can vary. The second contact surface of the second jaw comprises the contact surface of the resilient element. In addition, other surfaces may be provided on the second jaw that contact the bottom surface of the solar panel upon attachment of the drainage clip.

In this context, the term "eccentric" is used to indicate that the force on the drainage clip resulting from the first contact surface engaging the top surface of the solar panel and the force on the drainage clip resulting from the contact surface of the resilient element engaging the bottom surface of the solar panel, are not applied along the same axis. Consequently, the drainage clip after attachment has the tendency to rotate to find a stable equilibrium position. Due to its resilience, the resilient element stays in contact with the frame during rotation of the clip. The contact surface of the resilient element is typically positioned closer to the edge of the solar panel than the first contact surface. As such, a drainage clip with a first contact surface arranged on the top surface of the solar panel may show the tendency to rotate itself in a direction towards the protruding portion of the frame. The protruding portion provides an obstacle that blocks any further rotation of the first jaw of the drainage clip and thereby prevents the drainage clip from sliding off the solar panel. Nevertheless, the rotation ensures that the first contact surface of the drainage clip is adjacent to the protruding portion, resulting in an automatic placement of the drainage clip in a position wherein it is able to function as a siphon and form a drainage path. It will be understood by the skilled person that such an automatic placement feature is advantageous yet not essential. In other embodiments, a resilient element may be omitted and more attention is required during the placement of the drainage clip to ensure it is engaged correctly in a position wherein the drainage clip may function as a siphon.

In an embodiment, the resilient element is formed integrally with the second jaw. The resilient element may for instance be a cut-out portion in the second jaw that has been bent towards the first jaw. The skilled person will understand that dependent on the dimensions of the cut-out portion and the material, a certain resilience is obtained. Alternatively, a separate resilient element may be connected to the drainage clip to exert a force that leads to the rotation and automatic correct placement of the drainage clip.

In an embodiment, the drainage path starts from the top surface of the solar panel and extends along a drainage surface of the first jaw. Preferably, the drainage path starts from a lowest point on the top surface of the solar panel. Typically, the water accumulates on the top surface of the solar panel. It will be understood that dependent on the shape of the circumferential frame and the protruding portion, the drainage surface may start from a position on the top surface, or a position on the circumferential frame.

In an embodiment, the distance between the first contact surface and the second contact surface is adjustable between 20 and 50 mm. Typically, a circumferential frame of a solar panel has a thickness of 25, 30, 35 or 40 mm. A height-adjustability over a range of 20 mm to at least 50 mm thereby enables application of the drainage clip to all of the currently conventional solar panels instead of requiring separate drainage clips for each different type of solar panel and/or circumferential frame. It will be understood that similar drainage clips suitable for a different range of thicknesses may be made available if needed.

In an embodiment, the drainage path has a width between 10 mm and 50 mm. Here the width of the drainage path is defined perpendicular to the flow direction. Water can be drained due to the capillary action, which typically guides water away through a channel starting from the first contact surface of the first jaw and following the drainage surface. This channel typically has open sides but may also have closed sides. The width of the first contact surface typically defines the width of the drainage path and affects the volume of water that can be drained. Advantageous to a moderate overall size is that the drainage clip is compact and can be easily arranged around the circumferential frame after installation of the solar panels.

In an embodiment, the drainage path starts from the first contact surface. Alternatively, the drainage surface may be supported by the first contact surface and arranged to extend substantially parallel to the top surface.

In a further embodiment, the first contact surface protrudes from the drainage surface over a distance between 3 mm and 10 mm. This typically spaces the drainage surface at a distance of less than 3 to 10 mm as the circumferential frame protrudes from the light receiving surface of the solar panel.

In an embodiment, the first jaw and second jaw are integrally formed or permanently fixed together. Alternatively, the first jaw and second jaw are releasably connected to each other. In embodiments wherein the first jaw and second jaw are releasably connected to each other, it may be possible to select a pair of a first jaw and/or second jaw dependent on the dimensions of the solar panel and circumferential frame that the drainage clip is to be connected to.

In an embodiment, the height adjustability feature comprises a sliding track on the first jaw or second jaw, and a sliding element configured to slide in the sliding track on the other one of the first jaw or second jaw. The sliding track and sliding element provide a way of incorporating the height-adjustability feature for adjusting the distance between the first jaw and the second jaw. Advantageously, such a sliding track and sliding element can be integrally formed with the first and/or second jaw during manufacture.

In an embodiment, the drainage clip comprises a locking system for fixing the position of the first jaw with respect to the second jaw. The locking system may comprise a plurality of complementary engagement features on the first jaw and second jaw that allow the first and second jaw to be engaged to each other at a fixed position with respect to each other. For example, the first and second jaw may both be equipped with a toothed rack and configured to engage with each other to prevent a displacement of the first jaw with respect to the second jaw along the sliding track. Alternatively, or in addition, the first jaw and second jaw may be connected and fixed to each other using an additional fixing element such as a screw or bolt to clamp the jaws together.

In an embodiment, the first jaw and second jaw together form a clamping member that is configured to clamp around the circumferential frame of the solar panel. In this context, a clamp is considered to provide a continuous clamping force on opposing surfaces of the solar panel. Advantageously, no separate locking system is required to fix the position of the first jaw with respect to the second jaw. The clamping function may follow from the overall structural design and shape or the material of the drainage clip, wherein the first and second jaw are biased to a neutral position. Alternatively, the clamping function may be consequent to the presence of a separate biasing element such as a spring. In embodiments, a biasing element may also be used in addition to the locking system, or as an integral part of the locking system.

In an embodiment, the drainage clip further comprises a drainage gap in the first jaw and/or second jaw. Typically, the drainage path extends along a surface of the first jaw and a surface of the second jaw towards the drainage gap, allowing water to be drained from the top surface. Alternatively, the drainage clip may have a partially open structure and water may escape through the partially open structure.

In an embodiment, the drainage clip is made of a plastic material, such as polyoxymethylene (POM), high density polyethylene (HDPE), or a low density polyethylene (LDPE). Advantageously, the drainage clip is light-weight, relatively cheap, resistant against all temperatures that are likely to occur during use of the solar panel, and suitable for outdoor use. Preferably, the entire clip is made of plastic material, but it will be understood that in embodiments also other materials may be used in addition or alternative to the plastic. For example, the drainage clip may be made of metal or a metal alloy, such as stainless steel.

In an embodiment, the first and/or second jaw of the drainage clip are manufactured using injection molding. Advantageously, the drainage clips can be produced at relatively low cost.

In an embodiment, the drainage clip can be attached to the solar panel without the necessity to use tools or other equipment. Typically, no tools or other equipment are required to fasten the drainage clip around the solar panel. The installation of the drainage clip is easy and quick.

In an embodiment, the drainage clip further comprises an alignment feature. This ensures the correct placement of the drainage clip around the solar panel in a manner wherein a suitable drainage path is provided.

According to a second aspect of the invention, and in accordance with the advantages and effects described herein above, there is provided a kit comprising a first jaw and a second jaw of a drainage clip configured to the first aspect of the invention. Specifically for drainage clips that have jaws that can be releasably connected to each other, the components may be sold in a disengaged form and connected to each other during assembly.

According to a third aspect of the invention, and in accordance with the advantages and effects described herein above, there is provided a solar panel installation comprising a plurality of solar panels and a plurality of drainage clips. The drainage clips are attached to the solar panel to form a drainage path to drain water from the top surface of the solar panel, the drainage path comprising at least a section where the water flows upward to pass the protruding portion. The drainage clips can be applied to the solar panel installation directly during assembly of the installation of the roof, but may also be added later. This provides the opportunity to improve existing solar panel installations easily. In addition, the drainage clips may be provided at any position on the circumferential frame, dependent on the lowest point on the top surface of the solar panel.

In an embodiment, the drainage path comprises a narrow channel and a capillary action forces the water to flow upward in the narrow channel to pass the protruding portion. The water accumulates behind a protruding portion on the top surface of the solar. Arranging the drainage clip close to an edge of the protruding portion such that a narrow channel is formed leads to efficient drainage of the top surface.

In an embodiment, the narrow channel is formed between adjacent surfaces of the circumferential frame and the drainage clip. Typically, the narrow channel is formed by the placement of the drainage clip around the circumferential frame. The adjacent surfaces of the circumferential frame and the drainage clip may be substantially smooth, wherein the narrow channel is formed by spacing the adjacent surfaces over a short distance, e.g., a millimetre. Alternatively, or in addition, the surface of the drainage clip may comprise one or more grooves that contribute to the formation of one or more narrow channels, even when the drainage clip fits very tightly around the circumferential frame. In alternative embodiments, the channel may be part of the drainage clip and formed between surfaces of the drainage clip only.

In an embodiment, the amount of drainage clips is equal to or larger than the amount of solar panels. Typically, one drainage clip is provided on each solar panel as a single clip may suffice for draining the top surface of the solar panel. In embodiments, however, more than one drainage clip may be provided dependent on the number and position of local lowest points on the top surface.

In an embodiment, the plurality of solar panels are mounted at an angle between 0 degrees and 40 degrees with respect to the horizon, preferably between 10 and 25 degrees. In particular, when the solar panels are installed at a small angle with respect to the horizon, the total area where rain water accumulates on the light receiving surface can be rather large. Consequently, the gain of using a drainage clip is especially large in such situations.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1A shows a schematic perspective view of a solar panel installation on a roof, the solar panel installation comprising a plurality of drainage clips according to a first embodiment.
Figure 1B shows a detail of a drainage clip in the solar panel installation in Fig. 1A.
Figure 2A shows a perspective view of the drainage clip according to a first embodiment.
Figure 2B shows an exploded view of the drainage clip in Fig. 2A.
Figure 2C shows a side view of the drainage clip in Fig. 2A, wherein its attachment to a solar panel has been schematically indicated.
Figure 3A shows a perspective view of a drainage clip according to a second embodiment.
Figure 3B shows a side view of the drainage clip in Fig. 3A, wherein its attachment to a solar panel has been schematically indicated.
Figure 3C and 3D both show a front view of the drainage clip in Fig. 3A. Fig. 3C shows a so-called minimum height position of the drainage clip. Fig. 3D shows a maximum height position of the drainage clip.
Figure 4A shows a perspective view of a drainage clip according to a third embodiment.
Figure 4B and 4C each show a side view of the drainage clip in Fig. 4A. Fig. 4B shows a neutral position of the drainage clip. Fig. 4C shows the drainage clip adjusted to a first height wherein its attachment to a solar panel has been schematically indicated.

The figures are meant for illustrative purposes only, and do not serve as restriction of the scope or the protection as laid down by the claims

### Description of Embodiments

The following is a description of certain embodiments of the invention, given by way of example only and with reference to the figures.

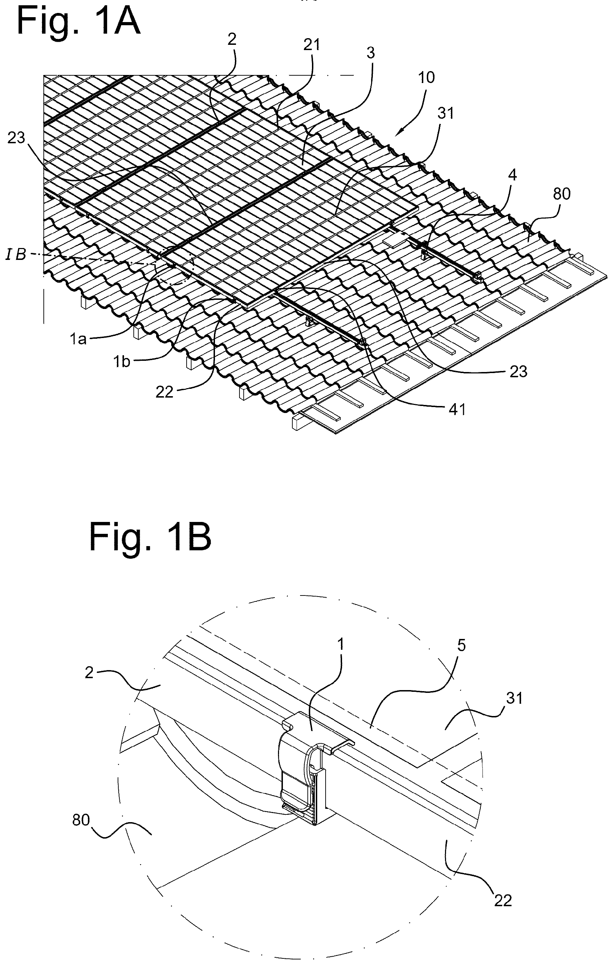

Figure 1A schematically shows a solar panel installation 10 on an inclined roof 80. The solar panel installation 10 comprises a plurality of solar panels 3 with drainage clips 1a, 1b. The solar panel installation 10 is mounted on the roof 80 using a mounting assembly 4 with fastening elements 41. Each solar panel 3 comprises a top surface 31, also referred to as light receiving surface, which is provided with solar cells for power generation. Each solar panel 3 further comprises a circumferential frame member 2 with an upper edge 21, a lower edge 22, and two side edges 23 surrounding the top surface 31. A bottom surface of each solar panel 3 is facing the roof 80.

The circumferential frame 2 surrounds the top surface 31 and thereby protects the light receiving surface from damages during transport and after installation. Moreover, the circumferential frame 2 provides a mounting structure for connecting the solar panel 3 to the roof 80 using the mounting assembly 4. The plurality of fastening elements 41 grip the circumferential frame 2 along its side edges 23, and fasten it to the roof 80. The solar panels 3 are installed on an inclined roof 80, making an angle of approximately 30 degrees with the horizon. Consequently, the solar panels 3, which are arranged substantially parallel to the roof 80, are also arranged under an angle of approximately 30 degrees with respect to the horizon.

Figure 1B shows a detail of one of the drainage clips 1 attached around the circumferential frame 2 at its lower edge 22. The circumferential frame 2 protrudes from the top surface 31 of the solar panel 3. Due to the inclined position of the solar panel 3, without drainage clip 1, rain water would accumulate in a region 5 (schematically indicated) that extends up to a few centimeters above the lower edge 22 of the frame 2. This rainwater reduces the power generation capability of the top surface 31 of the solar panel 3 as due to the accumulated water, algae and moss can grow on the top surface 31. In addition, the water can leave a trace of dirt when it evaporates. This further affects the power generation capability of the solar panel 3 until the top surface 31 has been cleaned. The drainage clip 1 as provided at the lower edge 22 of the circumferential frame 2 can drain water from the solar panel 3 before it accumulates.

As depicted in Fig. 1A, two drainage clips 1a, 1b are attached to each solar panel 3 at the lower edge 22 of the circumferential frame member 2. As measured from the lower left corner of each panel 3, a first drainage clip 1a is attached to the solar panel 3 at a distance of 1/6 of the total width of the solar panel. A second drainage clip 1b is mounted at a distance of 5/6 of the total width, as measured from a lower left corner of the solar panel. In this particular embodiment, this distribution facilitates a good drainage of top surface and efficiently prevents stagnant water. It will be understood by the skilled person that the drainage clips 1 are preferably arranged at the local lowest point or points on the top surface 31 as water will accumulate there. Therefore, the precise position of the drainage clip or drainage clips are typically only determined after installation of the solar panels 3.

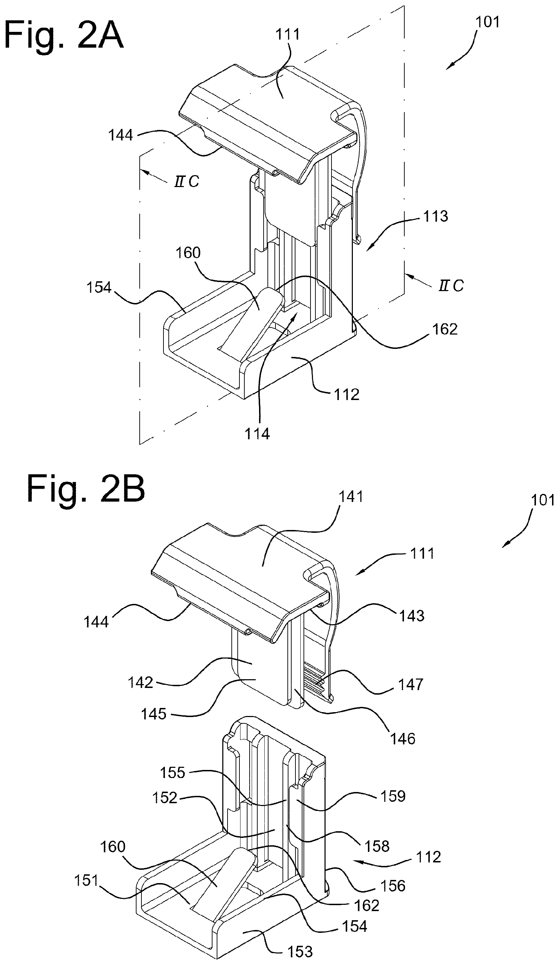

Fig. 2A shows a detailed perspective view of a drainage clip 101 according to a first embodiment of the invention. The drainage clip 101 may be attached to a solar panel 3 as shown in Fig. 1A and 1B.

The drainage clip 101 comprises a first jaw 111 with first contact surface 144, a second jaw 112 with second contact surface 154 and a resilient element 160 with tip 162, a height adjustability feature 113, and a drainage gap 114 in the second jaw 112. The first jaw 111 and second jaw 112 are formed as separate parts and are releasably connectable to each other. The drainage clip 101 is suited to be placed around solar panels 3 having a frame with a thickness between 25 mm and 46 mm. The drainage clip 101 is approximately 4 cm wide and is made of a plastic material, more specifically of polyoxymethylene (POM). It will be understood by the skilled person that also other plastic materials such as a high-density or low-density polyethylene may also be used.

Fig. 2B shows an exploded perspective view of the drainage clip 101 as shown in Fig. 2A. The first jaw 111 has a top part 141 and body part 142 substantially perpendicular to the top part 141. On its inner side, the top part 141 has a drainage surface 143 and a first contact surface 144. The body 142 has an inner surface 145, sliding element 146 and first locking features 147.

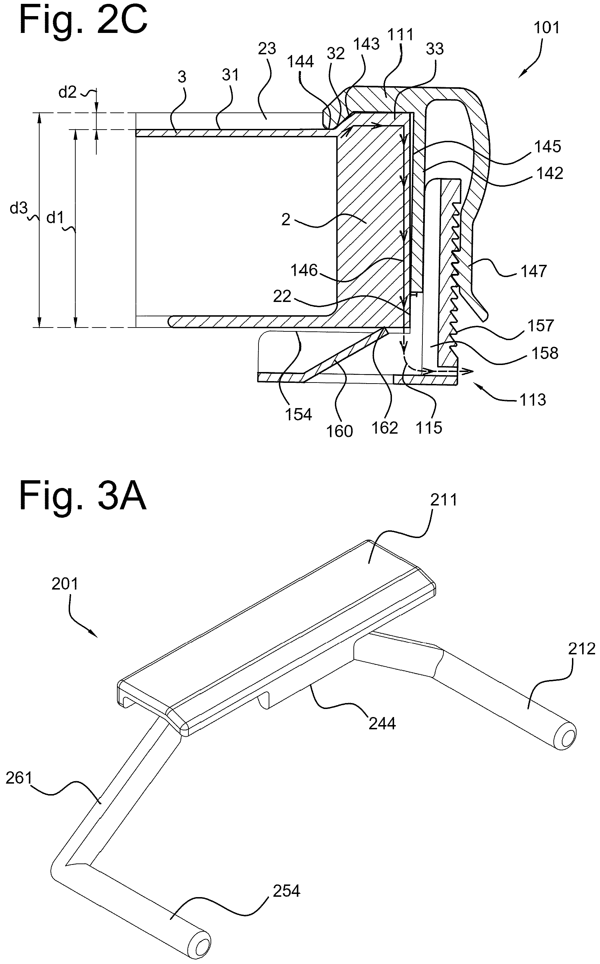

The second jaw 112 has a bottom part 151 and body part 152 substantially perpendicular to the bottom part 151. The bottom part 151 has two upstanding edges 153, each provided with a contact surface 154 for engaging the circumferential frame 2 and holding the frame between the first contact surface 144 and second contact surface 154. The bottom part 151 further comprises the resilient element 160 with tip 162. The body part 152 has an inner surface 155 provided with a sliding track 158, guides 159 for preventing the sliding element 146 from escaping the sliding track 158, and an outer surface 156 provided with second locking features 157 (see Fig. 2C).

The sliding element 146 is configured to be received in a sliding manner within the guides 159 of the sliding track 158, allowing an optimal height to be selected when the drainage clip 101 is attached to a solar panel 3. The first jaw 111 and second jaw 112 are typically pressed together to attach the drainage clip 101 to the solar panel 3, and once the optimal height of the drainage clip 101 has been reached, the jaws 111,112 are interlocked using the locking features 147, 157.

The locking features 147, 157 are complementary to each other. Both locking features 147, 157 are toothed racks that can engage with each other when pressed together. The locking features 147, 157 allow the distance between the first and second contact surfaces 144, 154 of the jaws 111, 112 to be regulated and fixed. The drainage clip 101 does not actively clamp the edge 22 of the solar panel 3, but does not slide off under the force of gravity as the protruding portion prevents this.

The locking feature 157 on the second jaw 112 is a toothed rack having a length of approximately 20 mm. Consequently, the distance between the first contact surface 144 and second contact surface 154 can be varied over a length of approximately 20 mm, allowing an overall distance between the two surfaces 144, 154 of between 25 mm and 46 mm.

The resilient element 160 on the bottom part 151 ensures an automatic correct placement of the drainage clip 101 around the circumferential frame 2. In this context "correct" is to be understood as a placement of the drainage clip in such a way that the drainage clip can function as a siphon. The resilient element 160 is provided as a cut-out portion in the bottom part 151 of the second jaw 152.

After a first attachment of the drainage clip 101 around the circumferential frame 2, the tip 162 of the resilient element 160 will contact the bottom surface of the solar panel 3 when the drainage clip 101 is attached. Similarly, the first contact surface 144 will contact the top surface 31. The location where the tip 162 contacts the bottom surface is not aligned with the location where the first contact surface 144 contacts the top surface 31. This means that the resulting normal forces acting at the two contact positions do not act along the same axis, resulting in an eccentric pair of forces on the drainage clip 101 and a generation of a rotational moment that causes the first jaw 111 of the drainage clip 101 to slide downwards along the top surface 31 of the solar panel 3 until it is prevented from movement by the protruding portion of the circumferential frame 2. The resilient element 160 is resilient along a direction extending perpendicular to the bottom surface of the solar panel. As such, both the first contact surface 144 and the tip 162 of the resilient element 160 can stay engaged to a surface of the solar panel 3 during rotation. The eccentric placement of the tip 162 relative to the first contact surface 144 thereby ensures that the first contact surface 144 contacts the top surface 31 at a lowest point 32 (see Fig. 2C) and that a narrow channel is provided between the first jaw 111 and the solar panel 3 to perform the capillary action and transport water accumulated at the top surface 31 across the protruding portion of the circumferential frame 2.

Typically, the first jaw 111 and second jaw 112 are provided as a set. It will be understood, however, that this two-part design has the additional benefit that a mix and match of compatible first and second jaws 111,112 may be made. In embodiments, the first jaw 111 may be combined with an alternative second jaw that for instance has a longer body 152 and thereby makes the drainage clip 101 suitable for application around even thicker solar panels 103. Similarly, in embodiments, the second jaw 112 may be combined with an alternative first jaw that has a differently shaped top part 141 and thereby is suitable for attachment around a differently shaped circumferential frame 2 of a solar panel 3.

Fig. 2C shows a cross-sectional side view of the drainage clip in Fig. 2A. A solar panel 3 with top surface 31, lowest point 32, circumferential frame 2, and lower edge 22 and protruding portion 33 of the circumferential frame 2 are schematically indicated. The circumferential frame 2 has a thickness d3 of approximately 35 mm. The cross-sectional view is taken along the length of the drainage clip 101, through the center as indicated in Fig. 2A.

The first contact surface 144 of the first jaw 111 contacts the top surface 31 of the solar panel 3 at the lowest point 32 on the top surface 31. The first contact surface 144 protrudes from a substantially parallel portion of the drainage surface 143 over a distance d2. In addition, the drainage surface 143 has an oblique portion connecting the substantially parallel portion to the first contact surface. The distance d2 is 6 mm, which is typically slightly larger than the height that the lower edge 22 protrudes with respect to the top surface 31. Moreover, the oblique portion has a different angle with respect to the top surface of the solar than the protruding portion of the circumferential frame. Consequently, a narrow channel is formed between adjacent surfaces of the drainage clip 101 and the frame 102, along the drainage surface 143 of the first jaw 111. This narrow channel is sufficient for the water to rise and pass the protruding portion 33 towards the lower edge 22 of the frame member 2 through a capillary function. It will be understood that the specific dimensions of the formed channel are dependent on the shape of the circumferential frame 2 in combination with the shape of the first jaw 111. The drainage path 115 is defined through the narrow channel and extends beyond the narrow channel between the lower edge 22 of the solar panel 3 and the body parts 142, 152 of the drainage clip 101. To improve readability, the drainage path 115 is indicated at a different location in Fig. 2C, such that the drainage path only indicates the directions of the flow and not the actual position.

The body part 142 extends in a direction perpendicular to the top part 141. Water that has found its way along the drainage surface 143 can continue to flow along a drainage path 115 to pass the lower frame edge 22. The water may flow between the lower frame edge 22 and the inner surface 145. Independently of the distance between the inner surface 145 and the lower frame edge 22, the water will find its way down consequent to forces of gravity.

Contact between the bottom surface of the solar panel and the second jaw 112 is provided by the tip 162 of the resilient element 160. It will be understood, however, that dependent on the precise dimensions of the circumferential frame and the positioning of the locking features 147, 157, contact may also occur between the second contact surface 154 and the bottom surface of the solar panel 3. In an alternative embodiment, no resilient element 160 may be provided, and the contact between the bottom surface of the solar panel 3 and the second jaw 112 is established through the second contact surface 154.

Fig. 3A-3D show a drainage clip 201 according to an alternative embodiment. The drainage clip 201 may also be attached to the solar panels 3 as indicated in Fig. 1A and 1B. Features of the drainage clip that have already been described above with reference to the first embodiment may also be present in the drainage clip shown in Fig. 3A-3D and will not all be discussed here again. For the discussion with reference to Fig. 3A-3D, like features are designated with similar reference numerals preceded by 200 to distinguish the embodiments.

The drainage clip 201 comprises a first jaw 211 with a first contact surface 244 and a second jaw 212 with second contact surfaces 254. The second jaw 212 comprises two legs 261 that can be pressed inward to vary the distance between the first and second contact surfaces 244, 254. The legs 261 are connected to the first jaw 211 and are biased with respect to each other through the memory of the material. The drainage clip 201 is integrally formed of a plastic material and is therefore relatively light-weight, suitable for outdoor use and cheap to manufacture.

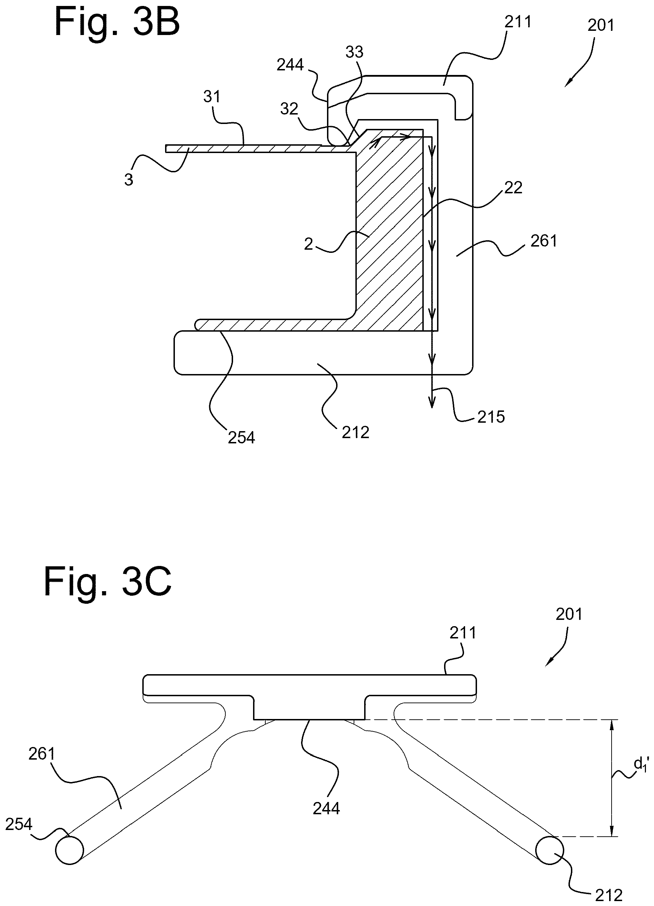

Fig. 3B shows a side view of the drainage clip 201, wherein the solar panel 3 has been schematically indicated. A drainage path 215 is provided starting from the first contact surface 244 of the drainage clip 201, which lifts the water from the lowest point 32 of the top surface 31 of the solar panel 3 along an inner surface of the first jaw 211 and across the protruding portion 33 of the circumferential frame 2, whereafter the water may drip from the lower edge 22 of the frame 2 and into the open space between the two legs 261.

Fig. 3C shows the drainage clip 201 in a so-called neutral position wherein no external force is applied to the legs 261. The distance d1' as measured between the first and second contact surfaces 244, 254 is approximately 25 mm. By pressing the legs 261 inward, i.e., towards each other, the height d1' is temporarily increased. The drainage clip 201 can be placed around a circumferential frame 2 of a solar panel 3, and once the pressure on the legs 261 is released, the legs 261 move outward again and the drainage clip 201 automatically clamps around the circumferential frame 2 of the solar panel 3.

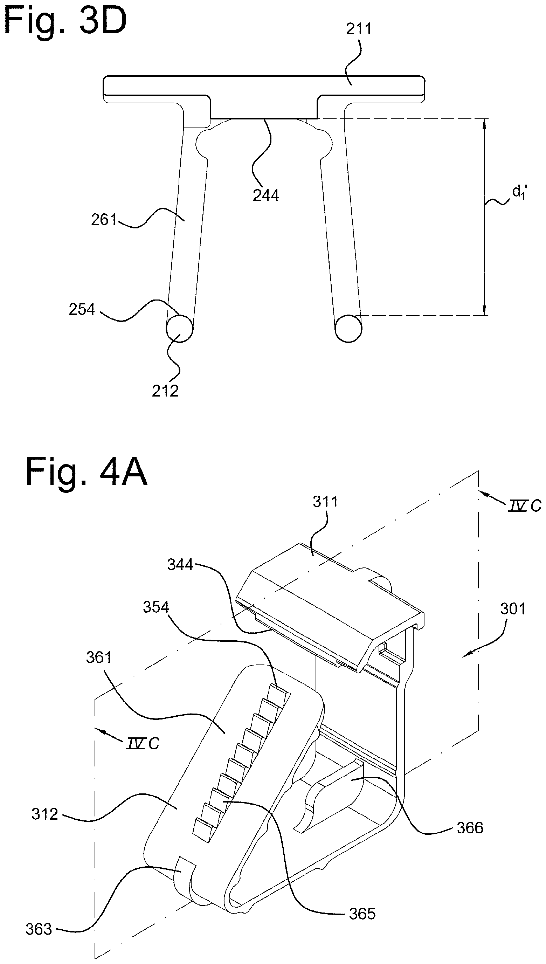

Fig. 3D shows the drainage clip 201 in a so-called biased position, wherein the legs 261 are pressed inward. In this configuration, the legs 261 are pressed to increase the distance d1' to approximately 45 mm. This configuration is also referred to as a maximum-height position as it is the approximate maximum position that can easily be achieved by an adult pressing the legs 261 inward. Forcing the legs 261 further inward may require the use of tools and/or lead to breaking of the drainage clip 201. The drainage clip 201 may be applied to any solar panel having a circumferential frame 2 with a thickness between 25 mm and 45 mm. The memory of the material generates a separating force on the pair of legs 261 and thereby ensures that the drainage clip 201 stays attached to the solar panel.

Fig. 4A-4C show a drainage clip 301 according to yet another alternative embodiment. The drainage clip 301 may also be attached to the solar panels as indicated in Fig. 1A and 1B. Features of the drainage clip 301 that have already been described above with reference to the first or second embodiment may also be present in the drainage clip 301 shown in Fig. 4A-4D and will not all be discussed here again. For the discussion with reference to Fig. 4A-4D, like features are designated with similar reference numerals preceded by 300 to distinguish the embodiments.

Fig. 4A shows a perspective view of the drainage clip 301. The drainage clip 301 comprises a first jaw 311 with a first contact surface 344 and a second jaw 312 with a second contact surface 354. The drainage clip 301 is integrally formed and hence the first jaw 311 and second jaw 312 are connected to each other.

The second jaw 312 comprises a leg 361. The leg 361 is connected to the first jaw 311 at a bent portion 363, which biases the leg 361 with respect to the first jaw 311. The leg 361 may be pressed downwards to vary the distance d1" between the first and second contact surfaces 344, 354. The bent portion 363 enables the leg 361 to function as a resilient element and provides the height adjustability.

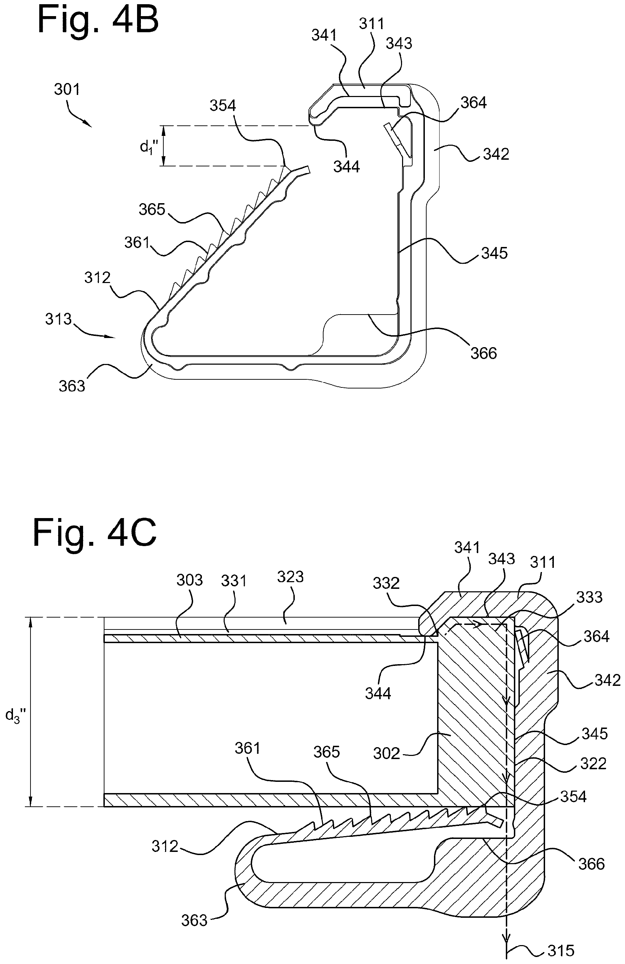

Fig 4B shows a side view of the drainage clip 301 in a neutral position wherein no external force is applied to the contact surface 354 of the second jaw 312. The distance d1" as measured between the first contact surface 344 and the second contact surface 354 is approximately 6 mm. By pressing the second contact surface 354 downwards, i.e., away from the first contact surface 344, the distance d1" is increased. The larger distance allows for the arrangement of the drainage clip 301 around a circumferential frame of a solar panel wherein the clip 301 clamps the frame. Once the pressure on the second contact surface 354 is released, the second jaw 312 is moved towards the first jaw 311 again, thereby decreasing the distance d1" between the two contact surfaces 344, 354 and actively clamping the drainage clip 301 around the circumferential frame of the solar panel. It will be understood that solar panels having different thicknesses can be clamped by the drainage clip 301.

The drainage clip 301 further comprises an alignment feature 364 on the first jaw 311 and a plurality of protrusions 365 on the second jaw 312. The first jaw 311 has a top part 341 and body part 342 substantially perpendicular to the top part 341. On its inner side, the top part 341 has a drainage surface 343 and a first contact surface 344. The body 342 has an inner surface 345. The alignment feature 364 is shaped as a lip protruding from the inner surface 345 and is resilient.

The drainage clip 301 is suitable to be placed around solar panels having a frame with a maximum thickness of approximately 30 mm. To that end, the drainage clip 301 comprises a stop edge 366. The stop edge 366 prevents the bending of the leg 362 over a distance from the first contact surface 344 that is larger than approximately 30 mm. The stop edge 366 thereby prevents damage of the clip 301 when its application around a thicker frame is attempted. The drainage clip 301 is approximately 3 cm wide and is made of a plastic material, more specifically of polyoxymethylene (POM). It will be understood by the skilled person that also other plastic materials such as a high-density or low-density polyethylene may also be used.

Fig. 4C shows a cross-sectional side view of the drainage clip in Fig. 4A and 4B. A solar panel 303 with top surface 331, lowest point 332 of the top surface, circumferential frame 302, and lower edge 322 and protruding portion 333 of the circumferential frame 302 are schematically indicated. The circumferential frame 302 has a thickness d3" of approximately 30 mm. The cross-sectional view is taken along the length of the drainage clip 301, through the center as indicated in Fig. 4A. It will be understood by the skilled person that the drainage clip 301 is also suitable for clamping thinner solar panels, for instance having a thickness of 25 mm, or any other thickness in the range between 25 mm and 30 mm. It will further be understood that these dimensions are only indicative and that the drainage clip may be adjusted to be used on solar panels having a different thickness.

The alignment feature 364 ensures that the drainage clip 301 is provided around the lower edge 322 of the frame 302 wherein both the drainage surface 343 and the inner surface 345 substantially abut, independently of the size and shape of the circumferential frame of the solar panel. In this context, a "substantial abutment" refers to two surfaces that are designed to be parallel to and in contact with each other, yet typically locally have a small distance between them due to the way of manufacturing the drainage clip 301. In particular, small local deformations of the drainage clip 301 may result upon removal of the drainage clip 301 from a mold. Advantageously, a drainage path 315 is formed between the solar panel frame 302 and the inner surfaces 343, 345 of the drainage clip 301 at the position of the deformations. Alternatively, the drainage path 315 may be provided by including a channel forming feature in the design of the drainage clip 301, such as a recessed or protruding rib.

The protrusions 365 extend from a surface of the second jaw 312 and are arranged to increase the resistance between a lower surface of the circumferential frame 302 and the drainage clip 301. The risk of accidental disengagement of the clip 301 is thereby reduced.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

## Claims

1. A drainage clip for draining water accumulating on a top surface of a solar panel and behind a protruding portion of a circumferential frame, wherein the drainage clip comprises:
a first jaw having a first contact surface for engaging a top surface of the solar panel;
a second jaw connected to the first jaw and having a second contact surface for engaging a bottom surface of the solar panel; and
a height-adjustability feature for adjusting the distance between the first contact surface of the first jaw and the second contact surface of the second jaw;
wherein after attaching the drainage clip to the solar panel, the drainage clip functions as a siphon and forms a drainage path to drain water from the top surface of the solar panel, the drainage path comprising at least a section where the water flows upward to pass the protruding portion.

2. The drainage clip according to claim 1 further comprising a resilient element on the second jaw, wherein a contact surface of the resilient element is arranged to exert a force on the bottom surface of the solar panel, and wherein the contact surface of the resilient element is arranged eccentrically to the first contact surface, preferably wherein the resilient element is formed integrally with the second jaw.

3. The drainage clip according to any of the preceding claims, wherein the drainage path starts from the top surface of the solar panel and extends along a drainage surface of the first jaw, preferably wherein the drainage path starts from the first contact surface, more preferably wherein the first contact surface protrudes from the drainage surface over a distance between 3 mm and 10 mm.

4. The drainage clip according to any of the preceding claims, wherein the distance between the first contact surface and the second contact surface is adjustable between 20 and 50 mm.

5. The drainage clip according to any of the preceding claims, wherein the first jaw of the drainage clip has a width between 10 mm and 50 mm.

6. The drainage clip according to any of the preceding claims, wherein the first jaw and second jaw are integrally formed or permanently fixed together.

7. The drainage clip according to any of the preceding claims, wherein the first jaw and second jaw together form a clamping member that is configured to clamp around the edge of the solar panel.

8. The drainage clip according to any of the preceding claims further comprising a drainage gap in the first jaw and/or second jaw.

9. The drainage clip according to any of the preceding claims, wherein the drainage clip is made of a plastic material.

10. The drainage clip according to any of the preceding claims, wherein the integrally formed drainage clip, the first jaw and/or the second jaw are manufactured using an injection molding process.

11. The drainage clip according to any of the preceding claims, wherein the drainage clip can be attached to the solar panel without the necessity to use tools or other equipment.

12. The drainage clip according to any of the preceding claims, further comprising an alignment feature for arranging the drainage clip around the solar panel.

13. A solar panel installation comprising a plurality of solar panels and a plurality of drainage clips according to any of claims 1-12, wherein the drainage clips are attached to the solar panel to form a drainage path to drain water from the top surface of the solar panel, the drainage path comprising at least a section where the water flows upward to pass the protruding portion.

14. The solar panel installation according to claim 13, wherein the drainage path comprises a narrow channel and wherein capillary action forces the water to flow upward in the narrow channel to pass the protruding portion, preferably wherein the narrow channel is formed between adjacent surfaces of the circumferential frame and the drainage clip.

15. The solar panel installation according to any of claims 13 or 14, wherein the amount of drainage clips is equal to or larger than the amount of solar panels, preferably wherein each solar panel is provided with two drainage clips, the first drainage clip being mounted at a distance between 1/6 and 1/3 of a total width of the solar panel, the second drainage clip being mounted at a distance between 2/3 and 5/6 of the total width of the solar panel from a lower left corner of the solar panel.
